# EUROPÄISCHE PATENTANMELDUNG

(11) **EP 0 974 616 A1**
(43) Veröffentlichungstag der Anmeldung: **26.01.2000**
(21) Anmeldenummer: 99113570.8
(22) Anmeldetag: 07.07.1999
(51) Int. Cl.: C08L 19/00, C08C 19/20, C08F 236/10, C08J 3/21

(54) **Hydroxylgruppenhaltige Lösungskautschuke**

(30) Priorität: 18.07.1998 DE 19832459; 18.07.1998 DE 19832458
(71) Anmelder: Bayer Aktiengesellschaft, 51368 Leverkusen (DE)
(72) Erfinder: Scholl, Thomas, Dr., 51469 Bergisch Gladbach (DE); Eisele, Ulrich, Prof. Dr., 51375 Leverkusen (DE); Trimbach, Jürgen, 50859 Köln (DE); Kelbch, Stefan, Dr., 53804 Much (DE)

(57) **Zusammenfassung**

Die Erfindung betrifft Kautschukmischungen enthaltend einen oder mehrere hydroxylgruppenhaltige in Lösung polymerisierte Kautschuke aufgebaut aus Diolefinen und vinylaromatischen Monomeren, gekennzeichnet dadurch, daß der oder die hydroxylgruppenhaltigen in Lösung polymerisierten Kautschuke im Bereich von 0,1 bis 5 Gew.-% gebundene Hydroxylgruppen enthält, ein Verfahren zu deren Herstellung, sowie deren Verwendung zur Herstellung von Formkörpern aller Art.

## Beschreibung

Die vorliegende Erfindung betrifft Kautschukmischungen enthaltend in Lösung polymerisierte Kautschuke mit einem Gehalt an Hydroxylgruppen, insbesondere primäre Hydroxylgruppen, von 0,1 bis 5 Gew.-% sowie deren Mischungen mit Füllstoffen, gegebenenfalls weiteren Kautschuken und Kautschukhilfsmitteln und daraus hergestellte Vulkanisate. Die erfindungsgemäßen Kautschukmischungen eignen sich zur Herstellung von hochverstärkten, abriebbeständigen Formkörpern, insbesondere zur Herstellung von Reifen, die eine besonders hohe Naßrutschfestigkeit aufweisen.

Doppelbindungshaltige anionisch polymerisierte Lösungskautschuke, wie Lösungs-Polybutadien und Lösungs-Styrol/Butadien-Kautschuke besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glastemperatur und der Molekülverzweigung. Hieraus ergeben sich in der praktischen Anwendung besondere Vorteile in der Relation von Naßrutschfestigkeit und Rollwiderstand des Reifens. So beschreibt US-PS 5.227.425 die Herstellung von Reifenlaufflächen aus einem Lösungs-SBR-Kautschuk und Kieselsäure. Zur weiteren Verbesserung der Eigenschaften sind zahlreiche Methoden zur Endgruppen-Modifizierung entwickelt worden, wie z.B. in EP-A 334 042 beschrieben, mit Dimethylaminopropyl-acrylamid oder, wie in EP-A 447.066 beschrieben, mit Silylethern. Durch das hohe Molekulargewicht der Kautschuke ist der Gewichtsanteil der Endgruppe jedoch gering und kann daher die Wechselwirkung zwischen Füllstoff und Kautschukmolekül nur wenig beeinflussen. Es war eine Aufgabe der vorliegenden Erfindung Lösungs-SBR-Kautschuke mit einem deutlich höheren Gehalt an wirkungsvollen Gruppen zur Füllstoffwechselwirkung herzustellen.

Hydroxylgruppenhaltige Lösungs-Polybutadien-Kautschuke werden auch in DE-OS 2.653.144 beschrieben. Diese Kautschuke eignen sich jedoch wegen ihrer zu geringen Festigkeit nicht als Hauptkomponente in Reifenlaufflächen.

Ein Verfahren zur Hydroxylierung von Kautschuken beschreibt EP-A 464.478, wobei es sich jedoch um die Einführung von sekundären Hydroxylgruppen handelt, die weit weniger effektiv sind als die primären Hydroxylgruppen der vorliegenden Erfindung.

Hydroxylgruppenhaltige Emulsions- und Lösungskautschuke beschreibt auch EP-806.452 A1, wobei die hier beschriebenen Hydroxylgehalte für Lösungskautschuke verfahrensbedingt in einem deutlich niedrigeren Bereich (0,009 bis 0,061 %) liegen. Die vorliegende Patentanmeldung zeigt, daß diese Gehalte keinen signifikanten Einfluß aufdie Naßrutschfestigkeit haben.

Es wurde jetzt gefunden, daß sich aus hydroxylgruppenhaltigen Lösungs-Vinylaromat/Diolefin-Kautschuken mit einem Gehalt von 0,1 bis 5 Gew.-% gebundenen Hydroxylgruppen, insbesondere primären Hydroxylgruppen, und einem 1.2-Vinylgehalt von 5 bis 60 Gew.-% Kautschukmischungen und Kautschukvulkanisate mit überraschend verbesserten dynamischen Dämpfungseigenschaften im naßrutschfestigkeitsrelevanten Temperaturbereich und im rollwiderstandsrelevanten Temperaturbereich und sowie verbessertem Abriebverhalten herstellen lassen. Weitere überraschende Vorteile wurden erhalten, wenn die Herstellung der Kautschukmischung nicht wie üblich im Kneter sondern durch Mischen einer Lösung von hydroxylgruppenhaltigem Kautschuk und oxidischem oder silikatischen Füllstoff in organischem Lösungsmittel erfolgte und anschließend das Lösungsmittel mit Wasserdampf erntfernt wurde, da dann der Füllstoff vollständig mit dem Kautschuk ausgefällt wird und nicht, wie beim Einsatz von unmodifiziertem Kautschuk, im Abwasser verbleibt.

Gegenstand der vorliegenden Erfindung sind daher Kautschukmischungen enthaltend einen oder mehrere hydroxylgruppenhaltige, in Lösung polymerisierte Kautschuke aufgebaut aus Diolefinen und vinylaromatischen Monomeren, gekennzeichnet dadurch, daß der oder die hydroxylgruppenhaltigen, in Lösung polymerisierten Kautschuke im Bereich von 0,1 bis 5 Gew.-% gebundene primäre Hydroxylgruppen enthält, sowie Füllstoffe und gegebenenfalls weitere Kautschuke und Kautschukhilfsmittel sowie die Verwendung besagter Kautschukmischungen zur Herstellung von Kautschukvulkanisaten, insbesondere kieselsäuregefüllten Reifenlaufflächen mit besonders hoher Abriebbeständigkeit, besonders hoher Naßrutschfestigkeit und geringem Rollwiderstand.

Die in Lösung polymerisierten Vinylaromat/Diolefin-Kautschuke besitzen vorteilhaft mittlere Molgewichte (Zahlenmittel) von 50.000 bis 2.000.000 und Glastemperaturen von -50° bis +20° C.

Die gebundenen Hydroxylgruppen sind primäre, sekundäre oder tertiäre, bevorzugt primäre und sekundäre.

Geeignete vinylaromatische Monomere sind Styrol, o-, m- und p- Methylstyrol, p-tert.-Butylstyrol, α-Methylstyrol, Vinylnaphthalin, Divinylbenzol, Trivinylbenzol und Divinylnaphthalin. Besonders bevorzugt wird Styrol.

Geeignete Diolefine sind insbesondere sind 1.3-Butadien, Isopren, 1.3-Pentadien, 2.3-Dimethylbutadien, 1-Phenyl-1.3-butadien und 1.3-Hexadien. Besonders bevorzugt werden 1.3-Butadien und Isopren.

Die Herstellung der erfindungsgemäßen Kautschuke für die erfindungsgemäßen Kautschukmischungen erfolgt durch anionische Lösungspolymerisation, d.h. mittels eines Katalysators auf Alkalimetallbasis, z.B. n-Butytllithium, in einem Kohlenwasserstoff als Lösungsmittel. Zusätzlich können die bekannten randomizer und Kontrollagentien für die Mikrostruktur des Polymers verwendet werden. Derartige anionische Lösungspolymerisationen sind bekannt und z.B. in I. Franta Elastomers and Rubber Compounding Materials; Elsevier 1989, Seite 73-74, 92-94 und in Houben-Weyl, Methoden der Organischen Chemie, Thieme Verlag, Stuttgart, 1987, Band E 20, Seiten 114 bis 134 beschrieben. Die Hydroxylgruppen werden in einer nachgeschalteten Reaktion am fertigen Polymer eingeführt. Methoden zur Einführung der Hydroxylgruppen sind z.B. die Addition von hydroxylgruppenhaltigen Mercaptanen, Anlagerung von Formaldehyd, Umsetzung mit Kohlenmonoxid und anschließende Hydrierung, Hydroborierung der Vinylgruppen des L-SBR's und anschließende oxidative Hydrolyse der Boranverbindung.

Beispiele für geeignete Alkalimetall-Polymerisationskatalysatoren im Sinne der vorliegenden Erfindung sind Lithium, Natrium, Kalium, Rubidium, Cäsiummetall und deren Kohlenwasserstoffverbindungen sowie Komplexverbindungen mit polaren organischen Verbindungen.

Besonders bevorzugt werden Lithium- und Natrium-Kohlenwassertoffverbindungen mit 2 bis 20 Kohlenstoffatomen, beispielsweise Ethyllithium, n-Propyllithium, i-Propyllithium, n-Butyllithium, sec-Butyllithium, tert.-Octyllithium, n-Decyllithium, Phenyllithium, 2-Naphthyllithium, 2-Butylphenyllithium, Cyclohexyllithium, 4-Cyclopentyllithium, 1.4-Dilithiobuten-2, Natriumnaphthalin, Natriumbiphenyl, Kalium-Tetrahydrofuran-Komplex, Kalium-Diethoxiethan-Komplex, Natrium-Tetramethylethylendiamin-Komplex. Die Katalysatoren können alleine und im Gemisch eingesetzt werden.

Bevorzugte Katalysatormengen liegen zwischen 0,2 und 15 mMol / 100 g Polymer.

Die anionische Lösungspolymerisation wird in einem Kohlenwasserstoff oder in einem anderen Lösungsmittel, welches den Katalysator nicht nachteilig beeinflußt, durchgeführt, beispielsweise Tetrahydrofuran, Tetrahydropyran, oder 1.4-Dioxan. Als Lösungsmittel geeignete Kohlenwasserstoffe sind beispielsweise aliphatische, cycloaliphatische oder aromatische Kohlenwasserstoffe mit 2 bis 12 Kohlenstoffatomen. Bevorzugte Lösungsmittel sind Propan, Butan, Pentan, Hexan, Cylohexan, Propen, Buten, 1-Penten, 2-Penten, 1-Hexene, 2-Hexen, Benzol, Toluol, Xylol. Die Lösungsmittel können alleine oder als Gemisch eingesetzt werden.

Die Einführung der Hydroxylgruppen erfolgt bevorzugt durch die Anlagerung von Hydroxylmercaptanen der allgemeinen Formel (1) und/oder hydroxylgruppenhaltigen Mercaptocarbonsäureestern der allgemeinen Formel (2). Die Reaktion wird bevorzugt in Lösung, gegebenenfalls in Gegenwart von Radikalstartern durchgeführt.

HS - R¹-OH (1)

HS-(CHR²)n-(CO₂-R³-OH)ₘ (2)

worin
- R¹: für eine lineare, verzweigte oder cyclische C₁-C₃₆-Alkylgruppe steht, die gegebenenfalls mit bis zu 6 weiteren Hydroxylgruppen substituiert sein kann oder durch Stickstoff-, Sauerstoff- oder Schwefelatome unterbrochen sein kann,
- R²: für Wasserstoff, oder eine C₁-C₆-Alkylgruppe und
- R³: für eine lineare, verzweigte oder cyclische C₂-C₃₆-Alkylgruppe steht, die gegebenenfalls mit bis zu 6 weiteren Hydroxylgruppen substituiert sein kann oder durch Stickstoff-, Sauerstoff- oder Schwefelatome unterbrochen sein kann,
- OH: für eine Hydroxylgruppe steht, insbesondere für eine primäre,
- n: eine ganze Zahl von 1 bis 5 bedeutet,
- m: eine ganze Zahl von 1 bis 2 bedeutet.

Bevorzugte Hydroxylmercaptane sind Mercaptoethanol, 1-Mercapto-3-propanol, 1-Mercapto-4-butanol. α-Mercapto-, ω-Hydroxy-oligoethylenoxide, wie z.B. α-Mercapto-, ω-Hydroxy-octaethylenglykol oder die entsprechenden Ethylenoxid/Propylenoxid-Mischpolyether. Besonders bevorzugt werden Mercapoethanol und α-Mercapto-ω-hydroxy-oligoethylenoxide.

Bevorzugte hydroxylgruppenhaltige Mercaptocarbonsäureester sind Ester der Mercaptoessigsäure, Mercaptopropionsäure und Mereaptobuttersäure mit Ethylenglykol, Propylenglykol, Butylenglykol, Diethylenglykol, Triethylenglykol, Tetraethylenglykol, Octaethylenglykol, Dipropylenglykol, Tripropylenglykol, Tetrapropylenglykol, N-Methyl-diethanolamin. Besonders bevorzugt werden die entsprechenden Ester der Mercaptoessigsäure und der 3-Mercaptopropionsäure.

Geeignete Radikalstarter zur Anlagerung der Hydroxylmercaptane an die Lösungskautschuke sind z.B. Azoinitiatoren, wie Azobisisobuttersäurenitril, Azobiscyclohexannitril und Peroxide, wie Dilauroylperoxid, Benzpinakolsilylether oder Photoinititatoren in Gegenwart von UV- oder sichtbarem Licht. Besonders bevorzugt werden Diacylperoxide, insbesondere Dilauroylperoxid, Didecanoylperoxid, Di-(3,3,5-trimethylhexanoyl) peroxid, Disuccinoylperoxid und Dibenzoylperoxid.

Bevorzugte Mengen an Radikalstartern sind 0,5 bis 10 Gew.-% bezogen auf Hydroxylmercaptan.

Die Mooney-Viskosität ML 1+4 der Copolymere liegt zwischen 10 bis 200, vorzugsweise 30 bis 150, gemessen bei 100°C.

Der Gehalt an einpolymerisierten 1.2-Butadien-Einheiten ( 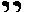 Vinylgehalt") liegt zwischen 5 und 60 Gew. %, vorzugsweise 10 bis 50 Gew.-%.

Der Gehalt an einpolymerisiertem Vinylaromat liegt zwischen 5 bis 40 Gew.-%, bevorzugt 10 bis 30 Gew.-%.

Der Gehalt an Hydroxylgruppen liegt zwischen 0,1 bis 5 Gew.-%, bevorzugt im Bereich von 0,1 bis 3 Gew.-%, besonders bevorzugt im Bereich von 0,3 bis 2 Gew. %, ganz besonders bevorzugt im Bereich von 0,5 bis 2 Gew.-%, bezogen auf Kautschuk.

Der Gehalt an Hydroxylgruppen kann nach bekannten Methoden ermittelt werden, also z.B. durch Spektroskopie, Tritrimetrie, Elementaranalyse oder durch die Bestimmung der sogenannten Hydroxylzahl (OH-Zahl), also durch Umsatz mit Reagentien, die in Berührung mit OH-Gruppen titrierbare Säuren abspalten. Siehe hierzu DIN 53.240.

Die in Lösung polymerisierten hydroxylgruppenhaltigen Kautschuke können alleine, im Verschnitt mit aromatischen oder aliphatischen Ölen oder im Gemisch mit anderen Kautschuken verwendet werden. Für die Herstellung von Kautschukvulkanisaten eignen sich als zusätzliche Kautschuke neben Naturkautschuk auch Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Compounding Materials, Elsevier, Amsterdam 1989 beschrieben. Sie umfassen u.a.
- BR -: Polybutadien
- ABR -: Butadien/Acrylsäure-C₁-C₄-alkylester-Copolymere
- CR: Polychloropren
- IR -: Polyisopren
- SBR -: Styrol/Butadien-Copolymerisate mit Styrolgehalten von 1 bis 60, vorzugsweise 20 bis 50 Gew.-%
- IIR -: Isobutylen/Isopren-Copolymerisate
- NBR -: Butadien/Acrylnitril-Copolmere mit Acrylnitrilgehalten von 5 bis 60, vorzugsweise 10 bis 40 Gew.-%
- HNBR -: teilhydrierter oder volllständig hydrierter NBR-Kautschuk
- EPDM -: Ethylen/Propylen/Dien-Copolymerisate
sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie z.B. in der EP-A-447.066 beschrieben, Polybutadienkautschuk mit hohem 1.4-cis-Gehalt (>90 %), der mit Katalysatoren auf Basis Ni, Co, Ti oder Nd gergestellt wird, sowie Polybutadienkautschuk mit mit einem Vinylgehalt von 0 bis 75 % sowie deren Mischungen von Interesse.

Die erfindungsgemäßen Kautschukmischungen enthalten 5 bis 300 Gew.-Teile eines aktiven oder inaktiven Füllstoffs, wie z.B.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen,
- synthetische Silikate, wie Aluminiumsilikat, Erdalkalisilikat wie Magnesiumsilikat oder Calciumsilikat, mit BET-Oberflächen von 20 bis 400 m²/g und Primärteilchendurchmessem von 10 bis 400 nm,
- natürliche Silikate, wie Kaolin und andere natürlich vorkommende Kieselsäure,
- Glasfasern und Glasfaserprodukte (Matten, Stränge) oder Mikroglaskugeln,
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat,
- Metallhydroxide, wie z.B. Aluminiumhydroxid, Magnesiumhydroxid,
- Ruße. Die hierbei zu verwendenen Ruße sind nach dem Flammruß, Furnace- oder Gasrußverfahren hergestellt und besitzen BET-Oberflächen von 20 bis 200 m²/g, wie z.B. SAF-, ISAF-, HAF-, FEF- oder GPF-Ruße.
- Kautschukgele, insbesondere solche auf Basis Polybutadien, Butadien/Styrol-Copolymere, Butadien/Acrylnitril-Copolymere und Polychloropren.

Besonders bevorzugt werden hochdisperse Kieselsäuren und Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt.

Die Füllstoffe werden bevorzugt als Feststoffe oder als Aufschlämmung in Wasser oder einem Lösungsmittel zur Lösung des/der hydroxylgruppenhaltigen, in Lösung polymerisierten Kautschuke hinzugegeben. Die Kautschuklösung kann vorher hergestellt werden, bevorzugt wird aber die aus der Polymerisation stammende Lösung direkt eingesetzt. Anschließend wird das Lösungsmittel thermisch oder bevorzugt mit Hilfe von Dampf entfernt. Die Bedingungen dieses Stripp-Prozesses lassen sich leicht durch Vorversuche ermitteln.

Weiterhin bevorzugt werden die Füllstoffe zum festen hydroxylgruppenhaltigen Kautschuk oder einem Gemisch aus Kautschuken hinzugegeben und auf bekannte Weise, z.B. mit einem Kneter, eingemischt.

Die erfindungsgemäßen Kautschukmischungen enthalten gegebenenfalls weiterhin Vemetzer. Als Vernetzer können Schwefel oder Peroxide eingesetzt werden, wobei Schwefel besonders bevorzugt wird. Die erfindungsgemäl3en Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol etc. die der Gummiindustrie bekannt sind.

In den bevorzugten Kautschukmischungen mit hochaktiven gefällten Kieselsäuren ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie in DB 2.141.159 und DB-AS 2.255.577 beschrieben, oligomere und/oder polymere schwefelhaltige Silylether der DE-OS 4.435.311 und EP-A 670.347, Mercapatoalkyltrialkoxisilane, insbesondere Mercaptopropyltriethoxisilan und Thiocyanatoalkylsilylether, wie z.B. in DE-OS 19.544.469 beschrieben.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf Kautschuk.

Die erfindungsgemäßen Kautschukmischungen eignen sich hervorragend zur Herstellung von Formkörpern aller Art.

Nichtlimitierende Beispiele dieser Formkörper sind O-Ringe, Profile, Dichtungen, Membranen, Reifen, Reifenlaufflächen, Dämpfelemente und Schläuche.

Besonders bevorzugt werden Reifen und Reifenlaufflächen.

### Beispiele

### Beispiel 1

Eine Lösung von 500 g Lösungs-SBR-Kautschuk Buna VSL 5025-0 (Bayer AG, Gehalt an gebundenem Styrol 25 Gew. %, Gehalt an 1.2-gebundenem Butadien 50 Gew. %) in 4 l Cyclohexan wird bei 70° C mit 25 g 1-Mercapto-2-ethanol und 1 g Dilauroylperoxid versetzt. Anschließend rührte man 16 Stunden bei 70° C nach. Dann setzte man 2,5 g Antioxidant Vulkanox BKF (Bayer AG) hinzu und destillierte das Lösungsmittel mit Wasserdampf ab. Nach dem Trocknen bei 70° C im Vakuum erhielt man 525 g eines farblosen Kautschuks mit der Glastemperatur (DSC) -11° C, OH-Zahl 34 und OH-Gehalt 1,04 Gew. %.

### Beispiel 2

Es wurde wie in Beispiel 1 verfahren, wobei folgende Mengen zum Einsatz kamen:

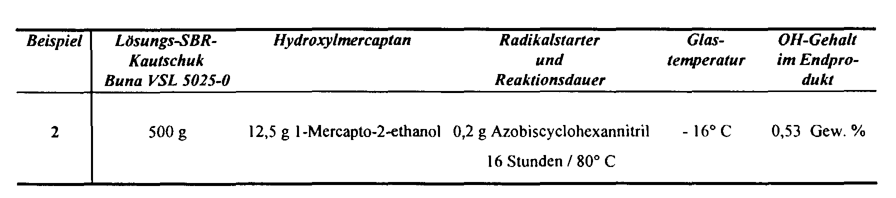

### Vergleichsbeispiele

Als Vergleichbeispiele wurde ein Lösungs-SBR-Kautschuk mit geringem Hydroxylgruppengehalt sowie ein Lösungs-SBR mit sekundären Hydroxylgruppen mit Hilfe des aus EP 464.478 bekannten 1-Mercapto-2-hydroxidodecan hergestellt. Hierbei wurde der gleiche Ausgangskautschuk verwendet. Es wurde wie in Beispiel 1 verfahren, wobei folgende Mengen zum Einsatz kamen:

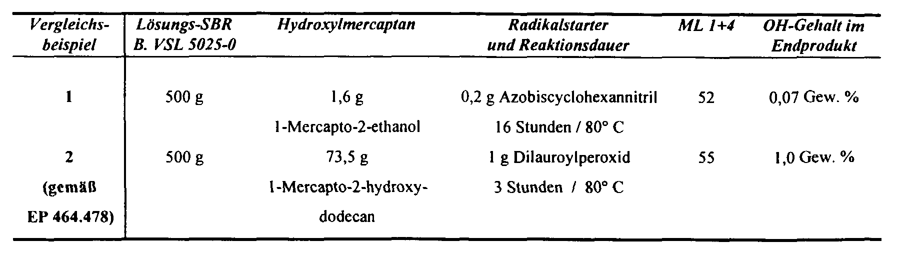

### Beispiel 3

Die folgenden Kautschukmisehungen wurden (bis auf Schwefel und Beschleuniger) bei 140°-150° C (Auswurftemperatur) in einem 1,5 l Kneter hergestellt. Mischdauer: 5 Minuten. Schwefel und Beschleuniger wurden bei ca. 50° - 70° C zum Schluß auf einer Walze zugemischt.

| ***Bestandteile*** | ***Vergleichsbeispiel 3.A*** | ***Vergleichsbeispiel 3.B*** | ***Vergleichsbeispiel 3.C*** | ***Beispiel 3.1*** | ***Beispiel 3.2*** |
|---|---|---|---|---|---|
| Buna VSL 5025-0 (Bayer AG) | 70 | 0 | 0 | 0 | 0 |
| Kautschuk gem. Bsp. 1 | 0 | 0 | 0 | 70 | 0 |
| Kautschuk gern. Bsp.2 | 0 | 0 | 0 | 0 | 70 |
| Kautschuk gemäß Vergleichsbeispiel. 1 | 0 | 70 | 0 | 0 | 0 |
| Kautschuk gemäß Vergleichsbeispiel. 2 | 0 | 0 | 70 | 0 | 0 |
| Buna CB 25 | 30 | 30 | 30 | 30 | 30 |
| Vulkasil S (Bayer AG) | 70 | 70 | 70 | 70 | 70 |
| aromat. Mineralöl | 37,5 | 37,5 | 37,5 | 37,5 | 37,5 |
| Silan Si 69 (Degussa) | 6 | 6 | 6 | 6 | 6 |
| Ruß N 121 (Degussa) | 10 | 10 | 10 | 10 | 10 |
| Zinkoxid RS (Bayer) | 2,5 | 2,5 | 2,5 | 2,5 | 2,5 |
| Stearinsäure | 1 | 1 | 1 | 1 | 1 |
| Vulkanox 4020 (Bayer) | 1 | 1 | 1 | 1 | 1 |
| Schwefel | 1,5 | 1,5 | 1,5 | 1,5 | 1,5 |
| Vulkacit CZ | 1,8 | 1,8 | 1,8 | 1,8 | 1,8 |
| Vulkacit D | 2 | 2 | 2 | 2 | 2 |

Die Kautschukmischungen wurden anschließend 20 Minuten bei 170° C vulkanisiert. Die Vulkanisate haften folgende Eigenschaften:

| ***Vulkanisat- Eigenschaft*** | ***Vergleichsbeispiel 3.A*** | ***Vergleichsbeispiel 3.B*** | ***Vergleichsbeispiel 3.C*** | ***Beispiel 3.1*** | ***Beispiel 3.2*** |
|---|---|---|---|---|---|
| Zugfestigkeit (MPa) ⁽¹⁾ | 14,3 | 15,9 | 16,3 | 17,0 | 15,5 |
| Bruchdehnung (%) ⁽¹⁾ | 350 | 365 | 380 | 340 | 330 |
| Spannungswert bei 100 % Dehnung (MPa) ⁽¹⁾ | 3,1 | 3,2 | 3 | 3,4 | 3,4 |
| Spannungswert bei 300 % Dehnung (%) ⁽¹⁾ | 11,9 | 12,2 | 11,9 | 14,6 | 13,6 |
| Shore A-Härte (23° C) ⁽²⁾ | 71 | 70 | 69 | 73 | 69 |
| Shore A-Härte (70° C) ⁽²⁾ | 68 | 65 | 65 | 71 | 65 |
| Rückprallelastizität bei 23° C (%) ⁽³⁾ | 32 | 30 | 28 | 25 | 28 |
| Rückprallelastizität bei 70° C (%) ⁽³⁾ | 50 | 50 | 49 | 51 | 53 |
| Differenz zwischen den Rückprallelastizitäten bei 23° und 70° C | 18 | 20 | 21 | 26 | 25 |
| Abrieb DIN 53.516 (ccm) | 93 | n.g. | | 87 | n.g. |

| | | | | | |
|---|---|---|---|---|---|
| (1) bestimmt mittels Zugversuch nach DIN 52 504 mit Normstab 2 | | | | | |
| (2) bestimmt nach DIN 53 505 | | | | | |
| (3) bestimmt nach DIN 53 512 | | | | | |

Die Versuchsergebnisse zeigen, daß die mechanischen Eigenschaften sowie das Abriebverhalten gegenüber dem unmodifizierten Kaustchuk verbessert wurden; darüberhinaus wurde eine deutlich niedrigere Rückprallelastizität bei Raumtemperatur gemessen, die erfahrungsgemäß mit einer deutlichen Verbesserung der Naßrutschfestigkeit einhergeht. Die Differenz zwischen den Rückprallelastizitäten bei Raumtemperatur und 70° C ist bei den erfindungsgemäßen Kautschukmischungen deutlich größer, sodaß auch die Relation von Naßrutschfestigkeit und Rollwiderstand im Reifen deutlich günstiger ist. Die nach dem bekannten Stand der Technik mit wenig Hydroxylgruppen modifizierten Lösungs-SBR-Kautschuke (Kautschuk gemäß Vergleichsbeispiel 1) und mit sekundären Hydroxylgruppen modifizierten Lösungs-SBR-Kautschuke (Kautschuk gemäß Vergleichsbeispiel 2) liegen in der Differenz zwischen den Rückprallelastizitäten bei Raumtemperatur und 70° C im Bereich der unmodifizierten Kautschuke sodaß die Relation von Naßrutschfestigkeit und Rollwiderstand im Reifen hier nicht signifikant verbessert wird.

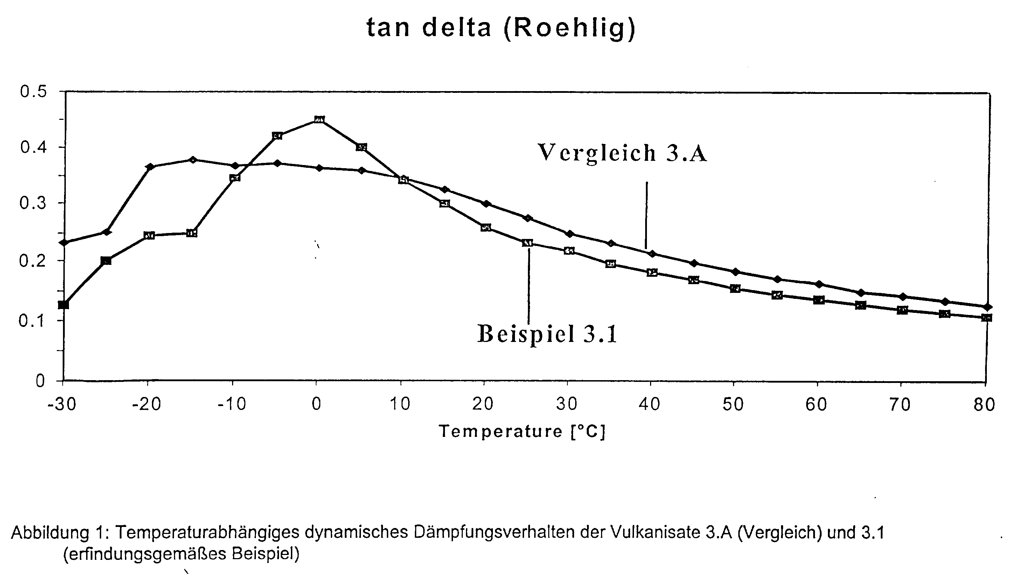

Zur Bewertung des Rollwiderstands- und Naßrutschfestigkeitsverhalten ist das dynamische Dämpfungsverhalten der Kautschukvulkanisate im Temperaturbereich von ca. -10 bis + 80° C ist von besonderer Bedeutung. Es wird eine möglichst hohe Dämpfung bei -10° bis +10° C gefordert und eine möglichst geringe im Temperaturbereich von 50° bis 80° C. Die folgende Abbildung 1 zeigt die mittels Roelig-Gerät (DIN 53 513) ermittelten dynamischen Dämpfungskurven über der Temperatur. Es ist eindeutig zu erkennen, daß das erfindungsgemäße Vulkanisat sowohl im rollwiderstandsrelevanten höheren Temperaturbereich als auch im naßrutschfestigkeitsrelevanten niedrigen Temperaturbereich überlegen ist.

### Beispiel 4

Die folgenden Kautschukmischungen wurden (bis auf Schwefel und Beschleuniger) bei 140° -150° C (Auswurftemperatur) in einem 1,5 l Kneter hergestellt. Mischdauer: 5 Minuten. Schwefel und Beschleuniger wurden bei ca. 50° - 70° C zum Schluß auf einer Walze zugemischt.

| ***Bestandteile*** | ***Vergleichsbeispiel 4.A*** | ***Beispiel 4.1*** |
|---|---|---|
| Buna VSL 5025-0 (Bayer AG) | 70 | 0 |
| Kautschuk gern. Bsp. 1 | 0 | 70 |
| Buna CB 25 | 30 | 30 |
| Ruß Corax N 121 (Degussa AG) | 50 | 50 |
| aromat. Mineralöl | 5 | 5 |
| Ozonschutzwachs Antilux 654 (Rheinchemie) | 1 | 1 |
| Zinkoxid RS (Bayer) | 3 | 3 |
| Stearinsäure | 2 | 2 |
| Antioxidant Vulkanox 4020 (Bayer AG) | 1 | 1 |
| Antioxidant Vulkanox HS (Bayer AG) | 1 | 1 |
| Schwefel | 1,7 | 1,7 |
| Vulkacit CZ | 1,4 | 1,4 |
| Vulkacit D | 0,3 | 0,3 |

Die Kautschukmischungen wurden anschließend 10 Minuten bei 170° C vulkanisiert. Die Vulkanisate hatten folgende Eigenschaften:

| ***Vulkanisat- Eigenschaft*** | ***Vergleichsbeispiel 4.A*** | ***Beispiel 4.1*** |
|---|---|---|
| Zugfestigkeit (MPa) ⁽¹⁾ | 18,9 | 20,8 |
| Bruchdehnung (%) ⁽¹⁾ | 358 | 353 |
| Spannungswert bei 100 % Dehnung (MPa) ⁽¹⁾ | 3,1 | 3,2 |
| Spannungswert bei 300 % Dehnung (%) ⁽¹⁾ | 15,0 | 16,9 |
| Shore A-Härte (23° C) ⁽²⁾ | 73 | 71 |
| Shore A-Härte (70° C) ⁽²⁾ | 66 | 65 |
| Rückprallelastizität bei 23° C (%) ⁽³⁾ | 34 | 27 |
| Rückprallelastizität bei 70° C (%) ⁽³⁾ | 50 | 50 |
| Differenz zwischen den Rückprallelastizitäten bei 23° und 70° C | 16 | 23 |
| Weiterreißfestigkeit (N/mm) | 14,9 | 23 |

Anhand der Prüfergebnisse aus Beispiel 4 wird deutlich, daß die erfindungsgemäßen günstigen Effekte im Dämpfungsverhalten nicht auf kieselsäuregefüllte Kautschukmischungen beschränkt sind sondern überraschenderweise auch in rußgefüllten Kautschukmischungen zu finden sind.

### Beispiel 5 Herstellung einer Kautsehukmischung aus Kieselsäure und einer Lösung eines Kautschuks mit 1 Gew.-% Hydroxylgruppen

Eine Lösung von 500 g Buna VSL 5025-0 (Lösungs-Styrol/Butadien-Kautschuk mit 25 Gew.-% Styrolgehalt, 50 Gew.-% 1,2-Vinylgehalt der Bayer AG) wurde mit 25 g Mercaptoethanol und 1 g Azobiscyclohexannitril versetzt und 16 Stunden auf 80°C erhitzt. Daraufhin wurden 2,5 g Vulkanox BKF (phenolisches Antioxidant der Bayer AG) 420 g Vulkasil 5 (hochaktive gefällte Kieselsäure mit BET Oberfläche 160-200 m²/g der Bayer AG) und 196,9 g Renopal 450 (aromatisches Mineralöl der Fa. Fuchs Mineralölwerke) bei 70°C eingerührt und das Lösungsmittel durch Einleiten von Wasserdampf abdestilliert. Man erhielt eine Kieselsäure/Kautschukmischung, in dem die Kieselsäure gleichmäßig verteilt vorlag. Das Abwasser war klar und frei von Kieselsäure. Die feuchte Kieselsäure/Kautschukmischung wurde bei 70°C im Vakuum getrocknet. Die Ausbeute an getrockneter Kautschukmischung betrug 1107 g (97 % d. Th.)

### Vergleichsbeispiel 5.A Herstellung einer Kautschukmischung aus Kieselsäure und einer Lösung eines Kautschuks ohne Hydroxylgruppen

500 g Buna VSL 5025-0 (Lösungs-Styrol/Butadien-Kautschuk mit 25 Gew.-% Styrolgehalt, 50 Gew.-% 1,2-Vinylgehalt der Bayer AG) sowie 2,5 g Vulkanox BKF (Phenolisches Antioxidans der Bayer AG) werden in 41 Cyclohexan gelöst. Dann setzt man 500 g Vulkasil S (hochaktive gefällte Kieselsäure mit BET Oberfläche 160 bis 200 m²/g der Bayer AG) hinzu, rührt zum Homogenisieren 45 Minuten bei 70°C nach und treibt anschließend das Lösungsmittel mit 100-110°C heißem Wasserdampf ab. Man erhielt einen Rückstand aus Kautschuk, in dem wenig Kieselsäure enthalten war. Der größte Teil der Kieselsäure hat sich im Abwasser angesammelt.

### Vergleichsbeispiel 5.B Herstellung einer Kautschukmischung aus Kieselsäure und einer Lösung eines Kautschuks mit 0,07 Gew. % Hydroxylgruppengehalt

Eine Lösung aus 500 g Buna VSL 5025-0 (Lösungs-Styrol/Butadien-Kautschuk mit 25 Gew.-% Styrolgehalt, 50 Gew.-% 1,2-Vinylgehalt der Bayer AG) wird mit 1,55 g Mercaptoethanol und 0,5 g Azobiscyclohexannitril versetzt und 16 Stunden auf 80°C erhitzt. Daraufhin wurden 2,5 g Vulkanox BKF (phenolisches Antioxidant der Bayer AG) 401,2g Vulkasil S (hochaktive gefällte Kieselsäure mit BET Oberfläche 160-200 m²/g der Bayer AG) und 188,1g Renopal 450 (aromatisches Mineralöl der Fa. Fuchs Mineralölwerke) bei 70°C eingerührt und das Lösungsmittel durch Einleiten von Wasserdampf abdestilliert. Man erhielt einen kautschukhaltigen Rückstand, in dem wenig Kieselsäure enthalten war. Der größte Teil der Kieselsäure hatte sich im Abwasser angesammelt und wurde über ein Sieb abgetrennt. Der kautschukhaltige Rückstand wurde bei 70°C im Vakuum getrocknet und ergab 821 g (75 % d.Th.)

## Patentansprüche

1. Kautschukmischungen enthaltend einen oder mehrere hydroxylgruppenhaltige in Lösung polymerisierte Kautschuke aufgebaut aus Diolefinen und vinylaromatischen Monomeren, gekennzeichnet dadurch, daß der oder die hydroxylgruppenhaltigen in Lösung polymerisierten Kautschuke im Bereich von 0,1 bis 5 Gew.-% gebundene Hydroxylgruppen enthalten.

2. Kautschukmischungen gemäß Anspruch 1, dadurch gekennzeichnet, daß der oder die hydroxylgruppenhaltigen in Lösung polymerisierten Kautschuke einen Gehalt an einpolymerisiertem Vinylaromat im Bereich von 5 bis 40 Gew.-% und einen 1,2-Vinylgehalt im Bereich von 5 bis 60 Gew.-% haben.

3. Kautschukmischungen gemäß Anspruch 1, dadurch gekennzeichnet, daß man als vinylaromatisches Monomer Styrol einsetzt.

4. Kautschukmischungen gemäß Anspruch 1, dadurch gekennzeichnet, daß man als Diolefine 1,3-Butadien und/oder Isopren einsetzt.

5. Verfahren zur Herstellung von Kautschukmischungen enthaltend einen oder mehrere Kautschuke mit einem Hydroxylgruppengehalt im Bereich von 0,1 bis 5 Gew.-% aufgebaut aus Diolefinen und vinylaromatischen Monomeren, dadurch gekennzeichnet, daß man zu der Lösung des oder der hydroxylgruppenhaltigen polymerisierten Kautschuken einen oder mehrere Füllstoffe in Mengen im Bereich von 0,5 bis 500 Gew.-Teilen bezogen auf 100 Gew.-Teile Kautschuk und gegebenenfalls weitere Hilfsmittel für die Aufarbeitung und/oder Verarbeitung und/oder Stabilisierung zugibt und anschließend das Lösungsmittel entfernt.

6. Verfahren nach Anspruch 5, dadurch gekennzeichnet, daß man das Lösungsmittel mit Hilfe von Dampf entfernt.

7. Verwendung der Kautschukmischungen gemäß Anspruch 1 zur Herstellung von Formkörpern aller Art, insbesondere zur Herstellung von Reifenlaufflächen.
